# EUROPÄISCHE PATENTANMELDUNG

(11) **EP 1 519 314 A1**
(43) Veröffentlichungstag der Anmeldung: **30.03.2005**
(21) Anmeldenummer: 03021600.6
(22) Anmeldetag: 25.09.2003
(51) Int. Cl.: G06T 7/00

(54) **Verfahren und Analysewerkzeug für die Überprüfung der Funktionstauglichkeit von Video-Überwachungsanlagen, sowie Messeinrichtung zur Durchführung des Verfahrens**

(71) Anmelder: Siemens Building Technologies AG, 8008 Zürich (CH)
(72) Erfinder: Marbach, Giuseppe, Dr., 5505 Schafisheim (CH); Müller, Kurt, Dr., 8708 Männedorf (CH); Loepfe, Markus, Dr., 8873 Amden (CH); Wieser, Dieter, 8700 Küsnacht (CH)
(74) Vertreter: Berg, Peter, Dipl.-Ing.

(57) **Zusammenfassung**

Die Funktionstüchtigkeit von Video-Überwachungseinrichtungen, welche mindestens eine Kamera (8) aufweisen, wird durch eine einen Prozessor (4) aufweisende Messeinrichtung und ein im Prozessor (4) implantierbares Analysewerkzeug (7) überprüft. Dabei werden die von der mindestens einen Kamera (8) gelieferten Bilder auf für die jeweilige Funktion charakteristische Parameter analysiert. Das Analysewerkzeug (7) ist im wesentlichen durch eine aus zwei Modulen (5, 6) bestehende Software gebildet, wobei das eine Modul (5) für die anwendungsspezifische Konfiguration der Software vorgesehen ist und für die aktuelle oder vorgesehene Anwendung wesentliche Parameter enthält. Das andere Modul (6) ist für die Analyse der von der mindestens einen Kamera (8) gelieferten Bilder vorgesehen, bei welcher eine Bewertung der Qualität der Bilder hinsichtlich der genannten Parameter erfolgt.

## Beschreibung

Die Erfindung betrifft die Überprüfung der Funktionstauglichkeit von Video-Überwachungseinrichtungen, welche mindestens eine Kamera aufweisen. Dabei bedeutet Überprüfung der Funktionstauglichkeit, dass man überprüft, ob eine installierte Video-Überwachungseinrichtung einerseits zufriedenstellend funktioniert und die vereinbarten Spezifikationen erfüllt, und ob eine solche Überwachungseinrichtung andererseits für zusätzliche Applikationen verwendet werden könnte.

Video-Überwachungseinrichtungen sind heute weit verbreitet und werden für viele Anwendungen eingesetzt. Neben dem Schutz gegen unbefugtes Eindringen, Diebstahl, Raub und Überfälle dienenden Einrichtungen in privaten und öffentlichen Gebäuden und auf öffentlichen Plätzen, werden Video-Überwachungseinrichtungen vermehrt im Strassenverkehr und hier insbesondere in Tunnels zur Verkehrsüberwachung eingesetzt, wobei die Überwachung praktisch ausschliesslich durch vor Monitoren sitzendes Personal erfolgt.

Während die Verkehrsüberwachung durch Videokameras schon seit Jahren praktiziert wird, werden erst in jüngster Zeit Versuche unternommen, anhand von Videobildern gewisse Verkehrssituationen, wie beispielsweise Staubildung, liegen gebliebene Fahrzeuge oder Unfälle und andere Gefahrensituationen, wie beispielsweise Rauch- oder Flammenbildung, automatisch zu detektieren, um möglichst rasch gezielte Gegenmassnahmen einleiten zu können. Bezüglich Rauch- und Flammendetektion wird auf die WO-A-02/054364 und die EP-Patentanmeldung Nr. 03 015 846.3 der Siemens Building Technologies AG verwiesen, auf die hiermit ausdrücklich Bezug genommen wird.

Wegen der vielen bereits installierten Video-Einrichtungen zur Verkehrsüberwachung gibt es eine zunehmende Tendenz, derartige Einrichtungen nachträglich auf weitere Anwendungen, wie beispielsweise Rauch- und/oder Flammendetektion umzurüsten, wobei die Umrüstung möglichst so erfolgen sollte, dass der Verkehrsfluss nicht gestört wird. Das gilt insbesondere für Tunnels, weil in der Regel jede Arbeit im Tunnel mit der Sperre von mindestens einer Fahrbahn verbunden ist.

Aus diesem Grund besteht seitens der Tunnelbetreiber der Wunsch, bestehende Video-Verkehrsüberwachungsinstallationen nachträglich und möglichst ohne Störung auf Rauch- und/ oder Flammendetektion umrüsten und die Tauglichkeit der angebotenen Systeme überprüfen und angebotene Systeme miteinander vergleichen zu können. Andererseits haben auch die Hersteller und Anbieter von Video-Rauch- und Flammendetektionssystemen ein Interesse daran, ob ihr System für die betreffende Verkehrsanlage geeignet ist.

Ein weiterer Wunsch, sowohl von Hersteller- als auch von Betreiberseite, geht in Richtung eines Test- oder Messsystems für die Überprüfung der Funktionstüchtigkeit einer bestehenden Video-Überwachungseinrichtung, beispielsweise im Rahmen von Wartungsarbeiten, oder beim Auftreten von Fehlalarmen, und dergleichen.

Bei diesen Überprüfungen darf der Einfluss der baulichen Gegebenheiten auf die Funktionsfähigkeit eines Video-Rauchdetektionssystems nicht unterschätzt werden. So erfolgt beispielsweise bei dem in der genannten WO-A-02/054364 beschriebenen Rauchdetektionssystem die Rauchdetektion durch eine Untersuchung des zeitlichen Verlaufs der Helligkeit der einzelnen Pixel oder von Gruppen von Pixeln der Videobilder, wobei die Bestimmung der Pixelhelligkeit durch einen Kantenextraktionsprozess erfolgt, bei dem jedem Pixel ein Kantenwert zugeordnet wird. Das ist im Wesentlichen eine auf Kontraständerungen basierende Methode. Es ist leicht einzusehen, dass in einem schlecht beleuchteten Tunnel oder in einem Tunnel mit dunklen Wänden Kontraständerungen vermutlich wesentlich weniger gut detektiert werden können, als in einem hellen und gut ausgeleuchteten Tunnel.

Die vorliegende Erfindung betrifft ein Verfahren für die Überprüfung der Funktionstüchtigkeit von Video-Überwachungseinrichtungen, welche mindestens eine Kamera aufweisen. Das erfindungsgemässe Verfahren soll es ermöglichen, die Funktionstüchtigkeit einer bestehenden Video-Überwachungseinrichtung auf möglichst einfache Art sowie objektiv und reproduzierbar überprüfen zu können, ohne dass es dabei zu einer Beeinträchtigung des Betriebs dieser Überwachungseinrichtung kommt.

Diese Aufgabe wird erfindungsgemäss dadurch gelöst, dass die von der mindestens einen Kamera gelieferten Bilder mittels einer einen Prozessor aufweisenden Messeinrichtung und eines im Prozessor implantierbaren Analysewerkzeugs auf für die jeweilige Funktion charakteristische Parameter überprüft werden.

Eine erste bevorzugte Ausführungsform des erfindungsgemässen Verfahrens ist dadurch gekennzeichnet, dass das genannte Analysewerkzeug im wesentlichen durch eine aus zwei Modulen bestehende Software gebildet ist, wobei das eine Modul für die anwendungsspezifische Konfiguration der Software vorgesehen ist und für die aktuelle oder eine vorgesehene Anwendung wesentliche Parameter enthält, und das andere Modul für die Analyse der von der mindestens einen Kamera gelieferten Bilder vorgesehen ist, bei welcher eine Bewertung der Qualität der Bilder hinsichtlich der genannten Parameter erfolgt.

Eine zweite bevorzugte Ausführungsform des erfindungsgemässen Verfahrens ist dadurch gekennzeichnet, dass die genannten wesentlichen Parameter durch mindestens eine Grösse aus der Gruppe Anzahl der Kanten im Bild, Kontrast des Bildes als Ganzes, Anteil der hell oder dunkel gesättigte Pixel, Farbe der Bilder, gebildet sind, dass eine Beurteilung der Güte der das jeweilige Bild charakterisierenden Parameter erfolgt, und dass das Ergebnis dieser Beurteilung angezeigt wird.

Eine dritte bevorzugte Ausführungsform des erfindungsgemässen Verfahrens ist dadurch gekennzeichnet, dass die Anzeige des Ergebnisses der Beurteilung jedes Parameters durch ein in einem Balken laufendes Anzeigeband erfolgt, wobei der Füllgrad des Balkens ein Mass für die Güte des jeweiligen Parameters darstellt.

Mit dem erfindungsgemässen Verfahren kann eine bestehende Video-Überwachungseinrichtung auf einfache Weise daraufhin überprüft werden, ob sie den gestellten Anforderungen noch genügt, indem man die oder eine Kamera dieser Einrichtung an die Messeinrichtung anschliesst, das Analysewerkzeug entsprechend konfiguriert und das Ergebnis der Analyse interpretiert. Man kann dann auf einen Blick sehen, ob beispielsweise in den Bildern einer für Rauch-Detektion verwendeten Video-Überwachungseinrichtung überhaupt genügend Kanten vorhanden sind oder ob der Kontrast genügend ist. Man kann aber auch auf einen Blick beurteilen, ob eine beispielsweise für Verkehrsüberwachung verwendete Video-Überwachungseinrichtung für Rauchdetektion geeignet wäre, indem man wiederum überprüft, ob genügend Kanten vorhanden sind und der Kontrast genügt. Ist dies nicht der Fall, dann kann man geeignete Massnahmen zur Verbesserung der Güte dieser Parameter evaluieren, indem man beispielsweise die Beleuchtung des Tunnels verbessert und/oder dessen Wände hell streicht und/oder am Strassenrand geeignete Markierungen anbringt.

Die Erfindung betrifft weiter ein Analysewerkzeug für die Überprüfung der von einer Kamera einer Video-Überwachungseinrichtung gelieferten Bilder auf die Funktionstüchtigkeit der Video-Überwachungseinrichtung. Das erfindungsgemässe Analysewerkzeug ist gekennzeichnet durch ein im Folgenden als Konfigurationsmodul bezeichnetes erstes Modul für die anwendungsspezifische Konfiguration des Analysewerkzeugs und ein im Folgendenden als Diagnosemodul bezeichnetes zweites Modul für die Analyse der von der mindestens einen Kamera gelieferten Bilder, wobei das Konfigurationsmodul für die zu Funktionstüchtigkeit relevante Parameter enthält und im Diagnosemodul eine Bewertung der Qualität der Bilder hinsichtlich der genannten Parameter erfolgt.

Die Erfindung betrifft weiter eine Messeinrichtung zur Durchführung des genannten Verfahren. Die erfindungsgemässe Messeinrichtung ist gekennzeichnet durch einen Laptop oder einen anderen transportablen Rechner mit einer Tastatur für die Eingabe von anwendungsspezifischen Daten, einem Bildschirm und einem Prozessor, in welchem das genannte Analysewerkzeug implementiert ist.

Eine erste bevorzugte Ausführungsform der erfindungsgemässen Messeinrichtung ist dadurch gekennzeichnet, dass im aufnahmebereiten Betriebszustand auf dem Bildschirm eine Dialogbox angezeigt wird, welche ein Bildfeld mit dem auszuwertenden Bild, ein Anzeigefeld für das Ergebnis der Überprüfung, ein Informationsfeld für Informationen über Modus und/oder Status des laufenden Programms und eine Reihe von Bedienungstasten aufweist. Vorzugsweise weist das Anzeigefeld für das Ergebnis der Überprüfung eine Reihe von Anzeigebalken für die einzelnen Parameter auf.

Eine zweite bevorzugte Ausführungsform der erfindungsgemässen Messeinrichtung ist dadurch gekennzeichnet, dass das Bildfeld wahlweise das aktuelle Bild der mindestens einen Kamera oder ein auf der Harddisk des Laptops gespeichertes Bild einer früher aufgenommenen Bildsequenz anzeigt.

Im Folgenden wird die Erfindung anhand eines Ausführungsbeispiels und der Zeichnungen näher erläutert; es zeigt:
Fig. 1 ein Blockdiagramm einer erfindungsgemässen Messeinrichtung,
Fig. 2 ein Flussdiagramm eines Messvorgangs der Messeinrichtung von Fig. 1,
Fig. 3 ein Detail der Messeinrichtung von Fig. 1; und
Fig. 4 ein Diagramm zur Funktionserläuterung.

Die dargestellte Messeinrichtung umfasst einen mit dem Bezugszeichen 1 bezeichneten Rechner 1, beispielsweise einen Laptop oder PC, mit einer Tastatur 2 zur Eingabe von Parametern, einem Bildschirm 3 zur Anzeige von Ergebnissen, einem Framegrabber (nicht dargestellt) und einem Prozessor 4, in dem eine aus einem Konfigurationsmodul 5 und einem Diagnosemodul 6 bestehende Analysesoftware 7 implementiert ist. Der Rechner 1 weist einen Anschluss für mindestens eine Kamera 8 einer Video-Überwachungseinrichtung auf. Die Analysesoftware 7, die auf einem Datenträger, beispielsweise einer CD, gespeichert ist und vor Inbetriebnahme der Messeinrichtung auf dem Rechner 1 installiert wird, ist ein Werkzeug zur Beurteilung, ob die Qualität der Bilder einer vorhandenen Video-Überwachungseinrichtung für Rauch- oder Flammendetektion oder auch für eine automatische Überwachung des Verkehrsgeschehens, wie Staus, Unfälle oder Pannenfahrzeuge in einem Tunnel genügt. Die nachfolgende Beschreibung der Analysesoftware 7 in Zusammenhang mit Rauch- und Flammendetektion soll nicht als einschränkend verstanden werden. Es ist für den Fachmann klar, dass das erwähnte Verkehrsgeschehen durch geeignete Parameter beschreibbar, und dass die Güte dieser Parameter überwachbar ist.

Die Analysesoftware 7 kann online Videobilder der Kamera 8 aufnehmen, auf dem Bildschirm 3 wiedergeben, analysieren und abspeichern oder gespeicherte Bildfolgen von der Harddisk lesen, auf dem Bildschirm 3 wiedergeben und analysieren. Zu jeder Analyse wir ein Report ausgegeben, der die Werte der untersuchten Parameter enthält.

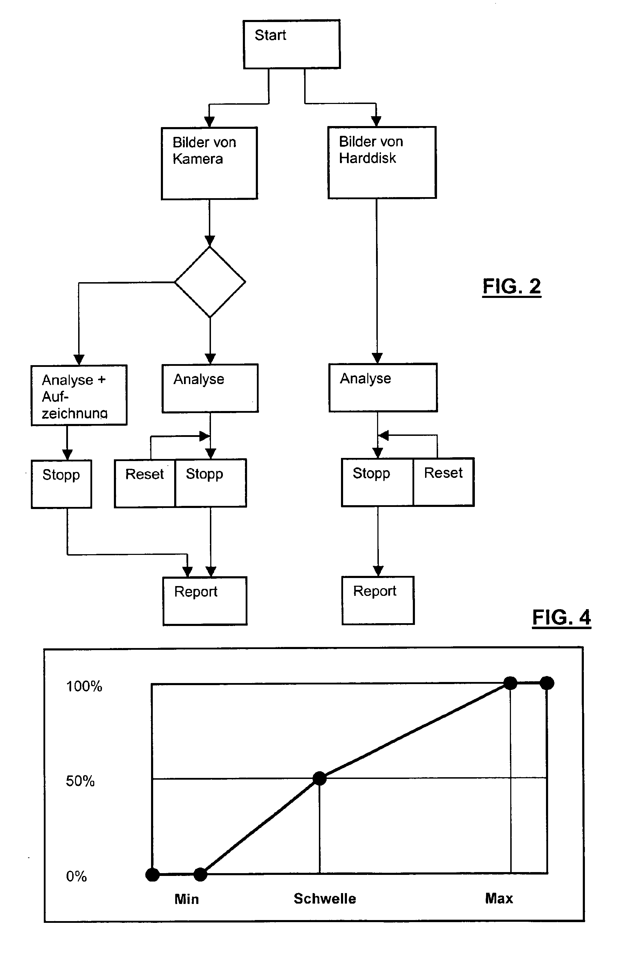

In Fig. 2 ist ein Flussdiagramm eines solchen Mess- oder Analysevorgangs der Messeinrichtung dargestellt. Vor dem Start des Messvorgangs werden die erforderlichen Einstellungen vorgenommen, wobei insbesondere für die einzelnen Parameter die Schwellwerte und die Maximal- und Minimalwerte eingestellt werden. Für Rauch- und Flammendetektion handelt es sich um die folgenden Parameter:
- Anzahl der Kanten im Bild: Hat ein Pixel einen Kontrast zu seinen Nachbarpixeln, der grösser ist als eine vorgegebene Schwelle, so bildet dieses Pixel eine Bildkante. Der Wert dieses Parameters sagt aus, ob in den Bildern genug Kanten vorhanden sind.
- Kontrast des Bildes als Ganzes: Hier handelt es sich um die Standardabweichung der Luminanz, also im wesentlichen um den optischen Eindruck. Dieser ist wichtig, weil bei einer geringen Dynamik Objekte vom Hintergrund nicht unterscheidbar sind.
- Hell- und Dunkelsättigung: Anteil der Pixel, die schwarz oder weiss gesättigt sind.
- Farbe: Angabe, ob die Bilder genügend Farbinformation für die vorgesehene Anwendung enthalten.

Eventuelle weitere Parameter sind das Rauschen, der Status der Kamera (ein-/ausgeschaltet), und dergleichen.

Eine weitere Einstellung betrifft die Festlegung des auszuwertenden Teils des Bildes der Kamera 8. Diese Einstellung erfolgt durch eine Maske, die beispielsweise für die Rauchdetektion in der oberen Hälfte oder im oberen Drittel des Kamerabildes platziert wird. Die genannten Parameter, die Position der Maske und eventuelle weitere Einstellwerte sind pro Konfiguration (Rauch, Flamme, Verkehrsüberwachung) einzeln einstellbar und können in der in Fig. 3 dargestellten Dialogbox abgerufen werden.

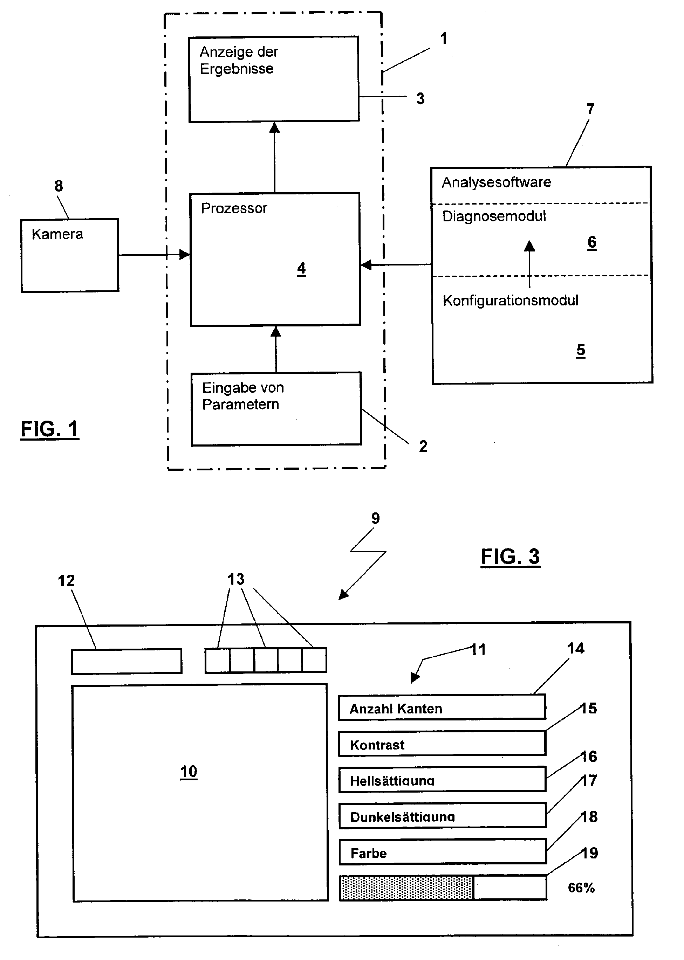

Wie schon erwähnt wurde, gibt es zwei Betriebsmoden für die Analysesoftware 7. Beim dem einen, im linken Ast von Fig. 2 dargestellten Mode kommen die Videobilder von der Kamera 8 (Fig. 1), beim zweiten, im rechten Ast von Fig. 2 dargestellten Mode kommen die Videobilder als Bildfolge von der Harddisk des Rechners 1. Für Videobilder von der Kamera verwendet man den Framegrabber als Zwischenspeicher und für die Digitalisierung. Beim Start der Analysesoftware wird ausgewählt, ob die Kamera als Bildquelle gewählt oder eine Bildfolge von der Harddisk ausgewählt wird. Im Fall der Wahl der Bilder von der Kamera kann man eine reine Analyse der laufenden Bilder mit Report-File oder eine Analyse der Bilder einschliesslich Speicherung der Bilder auf der Harddisk mit Report-File wählen. Die letztere Variante ist besonders für die Fälle gedacht, wo die Analyse über einen längeren Zeitraum von Stunden oder auch Tagen und eine periodische Abspeicherung von Bildern erfolgen soll.

Wenn die Bilder von der Harddisk kommen, erfolgt eine Analyse mit Report-File. Sowohl eine Bild-Analyse als auch eine Bild-Speicherung auf der Harddisk kann durch Drücken eines entsprechenden Funktionsknopfs gestoppt werden. Durch Betätigen eines Reset-Knopfes wird bei der Analyse der Kamerabilder der Bildzähler auf Null gestellt und bei der Analyse einer Bildfolge von der Harddisk die Analyse mit Start beim Bild Nummer Null wieder begonnen.

Das Report-File kann ausgedruckt werden; jeder Report enthält einen tabellarischen Bericht mit Datum, Identifikation der Kamera oder des abgespeicherten Files und mit den Werten der analysierten Bildparameter.

Fig. 3 zeigt eine Dialogbox 9, die auf dem Bildschirm 3 erscheint, sobald die Messeinrichtung für eine Messung bereit ist. Die Dialogbox enthält zwei Anzeigefelder 10 und 11 zur Anzeige des von der Kamera 8 gerade aufgenommenen Bildes (Anzeigefeld 10) beziehungsweise der Parameter für die Beurteilung des Bildes (Anzeigefeld 11). Oberhalb des Anzeigefeldes 10 ist eine Titelzeile 12 für Informationen über Modus und/oder Status des laufenden Programms oder über die aktuelle Konfiguration (Rauch, Flamme, Verkehrsüberwachung) vorgesehen, und neben der Titelzeile 12 eine Reihe von Bedienungstastenn für die Steuerung der Analysesoftware 7 gemäss Fig. 2. Unterhalb des Anzeigefeldes 10 ist eine Fusszeile (nicht eingezeichnet) für weitere Status und/oder Modusinformationen vorgesehen

Das Anzeigefeld 11 enthält mehrere übereinander angeordnete horizontale oder auch nebeneinander angeordnete vertikale Balken zur Anzeige der für die eingestellte Konfiguration relevanten Parameter. Bei der Überwachung eines Tunnels auf das Auftreten von Rauch wären das beispielsweise die Parameter "Anzahl Kanten" (Balken 14), "Kontrast" (Balken 15), "Hellsättigung" (Balken 16) und "Dunkelsättigung" (Balken 17). Der Parameter "Farbe" (Balken 18) wird in diesem Fall nicht analysiert. Anhand des untersten Balkens 19, der in der Figur keinem Parameter zugeordnet ist, wird die Darstellung der Parameter in den Balken illustriert.

Im Balken befindet sich ein farbiges Anzeigeband für die qualitative Beurteilung der Güte des ausgegebenen Parameters. Wenn das Anzeigeband bis zur Mitte des Balkens, das ist der 50%-Wert, reicht, wird angezeigt, dass der betreffende Parameter den Anforderungen gerade genügt. Ein Wert von 0% am linken und ein Wert von 100% am rechten Ende des Balkens ist schlecht beziehungsweise sehr gut. Die Länge des farbigen Balkens gibt einen zeitlich gemittelten Wert über beispielsweise 250 Bilder an, ausserdem befindet sich im Balken noch ein vertikaler Strich, der den Wert des jeweiligen Parameters für das gerade behandelte Einzelbild angibt. Schliesslich wird rechts von jedem Balken der Wert des Balkens, also der zeitlich gemittelte Wert, numerisch angezeigt.

Bei der Überwachung eines Tunnels auf das Auftreten von Flammen wird der Parameter "Anzahl Kanten" im Balken 14 nicht analysiert und dafür der Parameter "Farbe" im Balken 18 ausgewertet und angezeigt.

Das Diagramm von Fig. 4 zeigt die Übertragung der Parameterwerte des Bildes im Anzeigefeld 10 auf die Balken, wobei die Abszisse die Parameterachse und die Ordinate des Füllgrad des Balkens bezeichnet. Zuerst wird dem betreffenden Parameter auf der Parameterachse ein Minimalwert "Min" zugeordnet, der als sehr schlecht eingestuft wird, dann ein Wert "Max", der als sehr gut eingestuft wird, und ein Wert "Schwelle", der als genügend betrachtet wird. Dann wird dem Wert "Min" der Füllgrad 0%, dem Wert "Max" der Füllgrad 100% und dem Wert "Schwelle" der Füllgrad 50% zugeordnet. Der Füllstand des Balkens nimmt von "Min" bis "Schwelle" linear von 0% auf 50% und von "Schwelle" auf "Max" linear von 50% auf 100% zu. Wenn im Balken 14 eine Kantenanzahl von 0% angezeigt wird, dann bedeutet das also nicht, dass gar keine Kanten detektiert wurden, sondern, dass nur die dem Wert "Min" entsprechende Mindestanzahl von Kanten detektiert wurde. Gleiches gilt sinngemäss für die beiden Prozentwerte 50% und 100%.

## Patentansprüche

1. Verfahren für die Überprüfung der Funktionstüchtigkeit von Video-Überwachungseinrichtungen, welche mindestens eine Kamera (8) aufweisen, **dadurch gekennzeichnet, dass** die von der mindestens einen Kamera (8) gelieferten Bilder mittels einer einen Prozessor (4) aufweisende Messeinrichtung und eines im Prozessor (4) implantierbaren Analysewerkzeugs (7) auf für die jeweilige Funktion charakteristische Parameter überprüft werden.

2. Verfahren nach Anspruch 1, **dadurch gekennzeichnet, dass** das genannte Analysewerkzeug (7) im wesentlichen durch eine aus zwei Modulen(5, 6) bestehende Software gebildet ist, wobei das eine Modul (5) für die anwendungsspezifische Konfiguration der Software vorgesehen ist und für die aktuelle oder eine vorgesehene Anwendung wesentliche Parameter enthält, und das andere Modul (6) für die Analyse der von der mindestens einen Kamera (8) gelieferten Bilder vorgesehen ist, bei welcher eine Bewertung der Qualität der Bilder hinsichtlich der genannten Parameter erfolgt.

3. Verfahren nach Anspruch 2, **dadurch gekennzeichnet, dass** die genannten Parameter durch mindestens eine Grösse aus der Gruppe Anzahl der Kanten im Bild, Kontrast des Bildes als Ganzes, Anteil der hell oder dunkel gesättigte Pixel, Farbe der Bilder gebildet sind, dass eine Beurteilung der Güte der das jeweilige Bild charakterisierenden Parameter erfolgt, und dass das Ergebnis dieser Beurteilung angezeigt wird.

4. Verfahren nach Anspruch 3, **dadurch gekennzeichnet, dass** die Anzeige des Ergebnisses der Beurteilung jedes Parameters durch ein in einem Balken (14-19) laufendes Anzeigeband erfolgt, wobei der Füllgrad des Balkens ein Mass für die Güte des jeweiligen Parameters darstellt.

5. Verfahren nach Anspruch 4, **dadurch gekennzeichnet, dass** die Anzeige durch das Anzeigeband einen Mittelwert über eine bestimmte Anzahl von Bildern darstellt.

6. Verfahren nach Anspruch 5, dass in jedem Balken (11-19) zusätzlich zum Mittelwert des jeweiligen Parameters auch dessen Wert für das aktuelle Bild angezeigt wird.

7. Analysewerkzeug für die Überprüfung der von einer Kamera (8) einer Video-Überwachungseinrichtung gelieferten Bilder auf die Funktionstüchtigkeit der Video-Überwachungseinrichtung, **gekennzeichnet durch** ein im Folgenden als Konfigurationsmodul (5) bezeichnetes erstes Modul für die anwendungs-spezifische Konfiguration des Analysewerkzeugs (7) und ein im Folgendenden als Diagnosemodul (6) bezeichnetes zweites Modul für die Analyse der von der mindestens einen Kamera (8) gelieferten Bilder, wobei das Konfigurationsmodul (5) für die Funktionstüchtigkeit wesentliche Parameter enthält und im Diagnosemodul eine Bewertung der Qualität der Bilder hinsichtlich der genannten Parameter erfolgt.

8. Analysewerkzeug nach Anspruch 7, **dadurch gekennzeichnet, dass** die beiden Module (5, 6) Teil eines auf einem Datenträger gespeicherten Programms bilden.

9. Analysewerkzeug nach Anspruch 8, **dadurch gekennzeichnet, dass** auf dem Datenträger zusätzlich ein Treiber für eine Framegrabber-Karte und eine Schnittstelle zwischen Framegrabber und der durch die beiden Module (5, 6) gebildeten Software gespeichert ist.

10. Messeinrichtung zur Durchführung des Verfahrens nach einem der Ansprüche 1 bis 6, **gekennzeichnet durch** einen Laptop (1) oder einen anderen transportablen Rechner mit einer Tastatur (2) für die Eingabe von anwendungsspezifischen Daten, einem Bildschirm (3) und einem Prozessor (4), in welchem das genannte Analysewerkzeug (7) implementiert ist.

11. Messeinrichtung nach Anspruch 10, **dadurch gekennzeichnet, dass** im aufnahmebereiten Betriebszustand auf dem Bildschirm (3) eine Dialogbox (9) angezeigt wird, welche ein Bildfeld (10) mit dem auszuwertenden Bild, ein Anzeigefeld (11) für das Ergebnis der Überprüfung, ein Informationsfeld (12) für Informationen über Modus und/oder Status des laufenden Programms und eine Reihe von Bedienungstastenn (13) aufweist.

12. Messeinrichtung nach Anspruch 11, **dadurch gekennzeichnet, dass** das Anzeigefeld (11) für das Ergebnis der Überprüfung eine Reihe von Anzeigebalken (11-19) für die einzelnen Parameter aufweist.

13. Messeinrichtung nach Anspruch 11 oder 12, **dadurch gekennzeichnet, dass** das Bildfeld (10) wahlweise das aktuelle Bild der mindestens einen Kamera (8) oder ein auf der Harddisk des Laptops gespeichertes Bild einer früher aufgenommenen Bildsequenz anzeigt.

14. Messeinrichtung nach Anspruch 12, **gekennzeichnet durch** einen Framegrabber zur Zwischenspeicherung der von der mindestens einen Kamera (8) aufgenommen Bilder.
